(19) Europäisches Patentamt
European Patent Office
Office européen des brevets

(11) Numéro de publication : **0 505 230 A1**

(12) **DEMANDE DE BREVET EUROPEEN**

(21) Numéro de dépôt : **92400592.9**

(22) Date de dépôt : **06.03.92**

(51) Int. Cl.$^5$ : **C08F 292/00,** C08F 2/44

(30) Priorité : **22.03.91 FR 9103483**

(43) Date de publication de la demande :
**23.09.92 Bulletin 92/39**

(84) Etats contractants désignés :
**AT BE CH DE DK ES FR GB GR IT LI LU NL PT SE**

(71) Demandeur : **RHONE-POULENC CHIMIE**
**25, quai Paul Doumer**
**F-92408 Courbevoie Cédex (FR)**

(72) Inventeur : **Daniel, Jean-Claude**
**13, rue de Neuilly**
**F-94120 Fontenay/Sous/Bois (FR)**
Inventeur : **Espiard, Philippe**
**91, Cours Vitton**
**F-69006 Lyon (FR)**
Inventeur : **Guyot, Alain**
**7, Place Helvétie**
**F-69006 Lyon (FR)**

(74) Mandataire : **Seugnet, Jean Louis et al**
**RHONE-POULENC CHIMIE Direction de la Propriété Industrielle 25, Quai Paul Doumer**
**F-92408 Courbevoie Cedex (FR)**

(54) **Nouvelles particules mixtes à base de silices et de polymères, compositions filmogènes les contenant, films obtenus à partir desdites compositions et procédé de préparation.**

(57) L'invention concerne de nouvelles particules mixtes, du type comprenant une silice encapsulée à l'intérieur d'une matrice polymérique à propriétés filmogènes, et caractérisées par le fait que ladite matrice est chimiquement liée à la surface de ladite silice par des liaisons siloxanes Si-O-Si. Lesdites particules se présentent généralement sous la forme de colloïdes.

Elles peuvent être fabriquées selon un procédé consistant à (co)polymériser en émulsion aqueuse des (co)monomères organiques polymérisables, et ceci en présence d'une silice finement divisée qui a été préalablement fonctionnalisée en surface au moyen d'un organosilane convenable.

Les colloïdes obtenus permettent de fabriquer des films transparents à propriétés mécaniques améliorées.

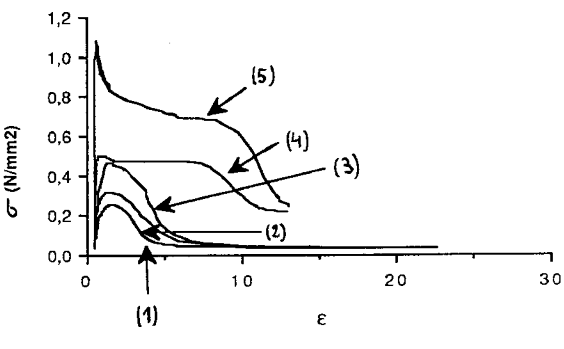


FIG. 1

EP 0 505 230 A1

La présente invention concerne, dans son aspect le plus général, de nouvelles particules mixtes constituées d'une charge minérale siliceuse confinée ou encapsulée à l'intérieur d'une matrice polymérique convenable, lesdites particules étant plus particulièrement destinées à une utilisation dans le domaine de la synthèse des couches de revêtement, films, pellicules et analogues, en polymères.

On sait depuis longtemps que les latex (dispersions aqueuses de particules de polymères) peuvent être utilisés en tant que compositions filmogènes pour revêtir, sous la forme de couches plus ou moins épaisses, des supports divers (béton, verre, métaux, acier, plastiques, céramiques...) et dans des buts variés (peintures, vernis, hydrofugation et, en général, toute protection physique et/ou chimique désirée pour le support).

Pour améliorer certaines des propriétés des latex, et notamment leurs propriétés mécaniques, il a déja été proposé d'y incorporer des charges minérales finement divisées.

Si les travaux, à l'origine, ont porté essentiellement sur la préparation de simples mélanges physiques charges/polymères, il s'est avéré plus récemment que, pour obtenir un meilleur effet de synergie entre les deux composants, il était en fait préférable de pouvoir disposer de particules mixtes dans lesquelles la charge minérale est encapsulée à l'intérieur des particules de polymères. Parmi les diverses voies d'accès possibles à ce type de produits déja proposées, un intérêt plus particulier a été accordé ces dernières années à la polymérisation en émulsion, opérée en présence de fines particules inorganiques. Cette technique est globalement analogue aux procédés classiques et connus de synthèse des latex, qui sont basés sur une (co)polymérisation en émulsion de (co)monomères organiques polymérisables appropriés, à cette différence près que, dans le cas présent, de fines particules minérales (charges) sont également présentes en suspension dans le milieu de polymérisation, et ceci dans le but d'y être encapsulées.

Parmi les particules inorganiques qui ont déja été étudiées, on peut citer, entre autres, le sulfite de calcium, le sulfate de baryum, le carbonate de calcium, le graphite, le quartz, le dioxyde titane et la silice (à ce sujet, voir notamment (a) Journal of polymèr Science : 20, p. 1021 - 1029 ; 25, p. 223 - 230 ; 25, p. 321 - 323 ; (b) Journal of Chemical Engineering of Japan : 21(1), p. 30 - 35 ; (c) Journal of Applied polymèr Science : 38, p. 2183 - 2189 ; (d) Die Angewangte Makromolekulare Chemie : 53, p. 65 - 72 ; (e) Makromolekulare Chemie, Molekular Symposium : 31, p. 123 - 142).

Si la plupart de ces travaux ont été réalisés avec le méthacrylate de méthyle comme monomère, il convient de noter que la demande de brevet EP-A-104498 décrit quant à elle la (co)polymérisation en émulsion d'un grand nombre de (co)monomères en présence d'une gamme variée de particules inorganiques.

Toutefois, il a été constaté que les particules mixtes du type ci-dessus présentent l'inconvénient de conduire à des films dont les propriétés finales peuvent apparaitre, à certains égards, comme encore insuffisantes, notamment au niveau de leurs propriétés mécaniques, et en particulier au niveau de leur élasticité et de leur résistance à la traction qu'il conviendrait de pouvoir augmenter.

La présente invention a donc pour but, entre autres, de résoudre les problèmes ci-dessus, en proposant de nouvelles particules mixtes qui permettent notamment d'aboutir à des films présentant des propriétés améliorées.

A cet effet, les travaux de la Demanderesse se sont plus particulièrement orientés vers des particules chargées en silice.

Plus précisément encore, il est maintenant proposé, selon la présente invention, de nouvelles particules mixtes qui sont du type comprenant une silice encapsulée à l'intérieur d'une matrice polymérique à propriétés filmogènes, lesdites particules étant caractérisées par le fait que ladite matrice est chimiquement liée à la surface de ladite silice par des liaisons siloxanes Si-O-Si.

Le procédé de synthèse des particules selon l'invention, qui est du type consistant à (co)polymériser, en présence d'une silice à l'état finement divisé, des (co)monomères organiques polymérisables, ce par quoi on obtient des particules mixtes comprenant de la silice encapsulée à l'intérieur d'une matrice de polymères, est caractérisé en ce que l'on utilise une silice dont la surface a été fonctionnalisée au moyen d'un organosilane de formule (1) :

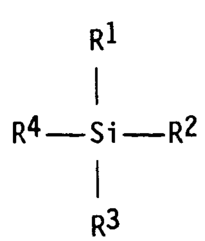

(1)

formule dans laquelle (i) au moins un des radicaux $R^1$, $R^2$, $R^3$ et $R^4$ est un radical organique présentant une

insaturation éthylénique, (ii) au moins un des radicaux $R^1$, $R^2$, $R^3$ et $R^4$ est un radical alkoxy ou hydroxy, (iii) les autres radicaux étant choisis, identiques ou différents, dans les classes de radicaux susmentionnées.

On voit donc que l'élément essentiel du procédé selon l'invention réside dans l'utilisation d'une silice de départ particulière, à savoir une silice fonctionnalisée en surface (opération aussi appelée grèffage ou modification) au moyen d'un agent convenablement sélectionné. Le ou les groupements hydroxy et/ou alkoxy de l'agent de fonctionnalisation réagissent (éventuellement après leur hydrolyse) avec les groupements silanols (Si-OH) présents à la surface de la silice pour donner des liaisons covalentes fortes de type siloxane (Si-O-Si), le radical organique à insaturation éthylénique restant étant alors destiné à participer ultérieurement aux mécanismes classiques de polymérisation des (co)monomères qui formeront la matrice polymérique autour des particules de silice.

On obtient ainsi des particules mixtes constituées d'une couche enrobante de polymères liée chimiquement et de façon irréversible à la surface de la silice encapsulée.

Les raisons exactes pour lesquelles les suspensions "latex" à base de telles particules mixtes conduisent à des films dont les propriétés élastiques sont améliorées, ne sont pas encore éclaircies.

Mais d'autres caractéristiques, aspects et avantages de l'invention apparaitront encore plus clairement à la lecture de la description qui va suivre, et des exemples concrets, mais non limitatifs, destinés à l'illustrer.

La mise en oeuvre du procédé de préparation des particules mixtes selon l'invention passe tout d'abord par la synthèse d'une silice fonctionnalisée telle que définie ci-avant.

Cette fonctionnalisation peut être obtenue par tout moyen connu en soi.

Pratiquement, on peut opèrer simplement par mise en contact d'une silice commerciale (pyrogénée, précipitée ou autre) avec un organosilane de formule (1) ci-dessus, et ceci selon des modalités classiques et connues dans le domaine (voir notamment les exemples donnés ci-après). On veillera à conduire le traitement jusqu'à ce qu'une fraction substantielle des groupements silanols présents initialement à la surface de la silice ait réagi avec l'organosilane, notamment au moins 50 %, et de préférence au moins 90 % de ceux-ci. Les poudres de silice à traiter sont choisies les plus fines possibles, le diamètre moyen des particules étant avantageusement inférieur au micron, et encore plus préférentiellement inférieur au dixième de micron.

Il est également possible d'utiliser des silices qui ont été directement fonctionnalisées lors de leur synthèse, par exemple selon la technique dite du "sol-gel en microémulsion inverse", et qui consiste à co-hydrolyser et co-condenser du tétraéthoxysilane et un organosilane dans une microémulsion constituée d'eau dans du toluène, et ceci en présence d'un émulsifiant, comme par exemple du diéthylhéxyl sulfosuccinate (voir notamment à ce sujet : polymer Bulletin (1990), 24, page 173)

Comme agents de fonctionnalisation de formule (1) ci-dessus utilisables dans la présente invention, on envisage surtout les organosilanes pour lesquels ledit radical organique à insaturation éthylénique est soit un radical alcényle à insaturation en ω, ayant de 2 à 10 atomes de carbone, et de préférence de 2 à 4 atomes de carbone, soit un ester d'acide carboxylique, ayant une insaturation oléfinique en ω, dérivant d'acides carboxyliques ayant jusqu'à 4 atomes de carbone ou d'alcools ayant jusqu'à 6 atomes de carbone.

Les organosilanes préférés dans la présente invention répondent à la formule (2) suivante :

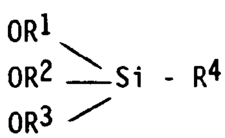
(2)

dans laquelle $R^4$ est un radical organique à insaturation éthylénique comme défini ci-avant, et $R^1$, $R^2$ et $R^3$ sont des radicaux alkyles ou l'hydrogène.

A titre d'exemples d'organosilanes convenant particulièrement bien, on peut citer le vinyl-triméthoxy-silane, le vinyl-triéthoxy-silane, le vinyl-diéthoxy-silanol, le vinyl-éthoxy-silane-diol, l'allyl-triéthoxysilane, le vinyl-tripropoxy-silane, le vinyl-triisopropoxy-silane, le vinyl-tributoxy-silane, le vinyl-triacétoxy-silane, le tris-(β-méthoxyéthoxy)-vinyl-silane, le (γ-(méth)acryloxy-propyl)-tris-(β-methoxyéthoxy)-silane, le (γ-(meth)acryloxy-propyl)-triméthoxy-silane et le (γ-(méth)acryloxy-propyl)-triéthoxy-silane.

Les greffons à la surface des silices ainsi traitées peuvent être identifiés par diverses techniques, et notamment par spectroscopie infra-rouge, par RMN (29 Si) et par analyses élémentaires. Toutes ces techniques permettent de confirmer sans ambiguités l'existence des liaisons covalentes du type siloxane (Si-O-Si) qui assurent le pontage entre le greffon et la surface de la silice.

Des silices fonctionnalisées étant ainsi obtenues, on procède ensuite à leur encapsulation.

Comme indiqué ci-avant, cette opération est réalisée conformément aux procédés classiques d'encapsulation de l'art antérieur, et notamment tels que décrits dans le document EP-A-104 498 dont l'enseignement

est ici inclus à titre de référence non limitative.

Brièvement, cette technique consiste à faire polymériser ou copolymériser, en présence de fines particules solides maintenues en suspension, un ou plusieurs monomères organiques polymérisables, cette technique étant directement issue, comme déja souligné, des procédés par ailleurs bien connus de synthèse des latex. Une telle polymérisation nécessite l'emploi de divers additifs classiques tels que des amorceurs de polymérisation et des émulsifiants (tensio-actifs). Dans le cadre de la présente invention, on notera que les émulsifiants à caractère non ionique possédant une chaîne polyoxyéthylénique, tels que par exemple le polyoxyéthylène lauryléther ou le nonylphénylpolyoxyéthylène, conviennent particulièrement bien.

A titre d'amorceur de polymérisation, on peut utiliser avantageusement les persulfates alcalins, notamment de potassium, et les dérivés de l'Azobis isobutyronitrile.

Avant de mettre en oeuvre l'étape de polymérisation, il est important, selon l'invention, d'obtenir tout d'abord une bonne dispersion de fines particules de silice dans l'eau, en limitant au maximum la formation d'agrégats.

C'est pourquoi, selon le caractère hydrophobe plus ou moins marqué des silices fonctionnalisées qui sont utilisées, il peut être nécessaire soit de rajouter dans la dispersion aqueuse initiale une certaine quantité d'isobutanol, généralement à raison de quelques grammes par gramme de silice engagée, soit d'ajuster le pH de cette dispersion à une valeur convenable, notamment par ajout d'ammoniaque.

Les monomères organiques polymérisables destinés à consituer la couche polymérique autour des particules de silice sont, quant à eux, essentiellement sélectionnés en fonction de leur aptitude à donner, après polymérisation, des latex filmogènes. On entend par latex filmogènes des latex présentant une Température Minimale de Formation de Film (TMFF) inférieure à 60°C,et de préférence inférieure à 35°C.

Selon des critères habituels et connus pour l'homme de l'art, ces monomères peuvent donc être convenablement choisis notamment parmi :

a) les (méth)acrylates d'alkyle, dont la partie alkyle comporte de préférence de 1 à 18 atomes de carbone, en particulier le (méth)acrylate de méthyle, d'éthyle, de propyle, de n-butyle et d'isobutyle.

b) les esters $\alpha$,$\beta$-éthyléniquement insaturés d'acides monocarboxyliques dont la partie acide est non polymérisable et dont la partie insaturée comporte de préférence de 2 à 14 atomes de carbone et la partie acide de 2 à 12 atomes de carbone, en particulier l'acétate de vinyle, le propionate de vinyle, le butyrate de vinyle, l'acétate d'allyle et le versatate de vinyle.

c) les vinyl aromatiques présentant de préférence au plus 24 atomes de carbone et choisis en particulier parmi le styrène, les alkylstyrènes, les chlorostyrènes et les chloroalkylstyrènes comme par exemple l'$\alpha$-méthylstyrène, le 4-méthylstyrène, le 2-méthylstyrène, le 3-méthylstyrène, le 4-méthoxystyrène, le 2-hydroxyméthylstyrène, le 4-éthylstyrène, le 4-éthoxystyrène, le 3,4-diméthylstyrène, le 2-chlorostyrène, le 3-chlorostyrène, le 4-chloro-3-méthylstyrène, le 4-ter-butylstyrène, le 4-dichlorostyrène, le 2,6-dichlorostyrène, le 2,5-difluorostyrène, et le 1-vinylnaphtalène.

d) les monomères diéniques tels que le butadiène et le chloroprène

e) des mélanges de monomères constitués par un ou des monomères a) et un ou des monomères b), tels que les systèmes du type acétate de vinyle/acrylate d'alkyle,

f) des mélanges de monomères constitués par un ou des monomères a) et un ou des monomères c), tels que les systèmes du type (méth)acrylate d'alkyle/styrène.

g) des mélanges de monomères constitués par un ou des monomères c) et un ou des monomères d) tels que les systèmes du type styrène/butadiène.

h) des mélanges de monomères constitués par des combinaisons binaires, ternaires, ou quaternaires de monomères du type a, b, c et d.

i) des mélanges de monomères constitués par des combinaisons de monomères de types décrits ci-dessus ( a) à h) ) et contenant en outre, entre 0 et 15 % et de préférence entre 0 et 5 % par rapport à la somme des autres monomères :

- un ou plusieurs acides carboxyliques $\alpha$, $\beta$, éthyléniquement insaturés, ayant de préférence de 3 à 12 atomes de carbone, tels que les acides acrylique, méthacrylique, itaconique, fumarique et maléique,
- et/ou un ou plusieurs acides sulfoniques insaturés ayant de préférence de 2 à 12 atomes de carbone, tels que les acides vinylsulfonique, sulfoéthylméthacrylique, méthallylsulfonique, acrylamidométhylpropanesulfonique et allyléthersulfonique,

lesdits acides carboxyliques et/ou sulfoniques pouvant être introduits sous leur forme acide ou sous forme de sels.

La liste de monomères ou de mélanges de monomères ci-dessus n'est bien sûr nullement limitative.

En outre, des monomères difonctionnels ou polyfonctionnels tels que le phtalate d'allyle, le divinylbenzène, les diacrylates ou diméthacrylates d'éthylène ou de polyéthylène glycol, le méthacrylate de vinyle, le (méth)acrylate d'allyle, le tétraallyoxyéthane, ou le triméthacrylate de triméthyl propane, peuvent être incorporés en faible proportion (inférieure à 10 % et généralement inférieure à 5 % en poids) dans le mélange des monomères cités ci-dessus. Cette liste de monomères di-ou polyfonctionnels n'est pas non plus limitative.

Les rapports en poids silice engagée/monomère(s) engagé(s) peuvent varier dans de larges limites, en particulier de 1/1 à 1/100, et de préférence de 1/4 à 1/100.

La température à laquelle est conduite la réaction de polymérisation n'est pas en soi critique et peut également varier dans de larges limites. Elle peut aller notamment de l'ambiante à 100°C ; pour des raisons de cinétique de réaction, on se place généralement entre 50 et 90°C, selon la nature de l'amorceur choisi.

Le ou les (co)monomères peuvent être introduits en totalité avec la silice au démarrage de la réaction, ou bien en continu ou de façon séquencée au cours de la réaction. Il en est de même pour l'émulsifiant, l'amorceur ou l'agent de transfert.

La réaction est conduite jusqu'à l'obtention d'une conversion maximale des monomères en polymères.

A l'issue de la polymérisation, on recueille une suspension type "latex" constituée essentiellement de particules mixtes selon l'invention à l'état colloïdal.

Cette suspension contient en outre des quantités mineures des divers additifs qui ont pu être utilisés pour conduire la réaction de polymérisation (amorceurs, émulsifiants), et éventuellement de monomères qui n'ont pas réagi. La teneur en solide (extrait sec) de cette suspension colloïdale peut aller jusqu'à 70 % en poids, mais elle est généralement inférieure ou égale à 50 %. Si on le désire, les particules mixtes selon l'invention peuvent être ultérieurement séparées du milieu de réaction par tout moyen approprié, notamment par filtration, ultracentrifugation, atomisation ou autre.

Comme déja indiqué ci-avant, les particules mixtes selon l'invention se différencient des particules mixtes de l'art antérieur par le fait que la silice est chimiquement liée à la matrice polymérique qui l'encapsule.

La taille moyenne des particules mixtes selon l'invention peut varier dans de larges limites, et notamment aller de 20 nanomètres à quelques microns, en étant toutefois de préférence inférieure à 1 micron.

La teneur en poids en silice de telles particules peut aller de 0,1% à 50 %, en étant toutefois de préférence inférieure à 20 %. Cette teneur est fonction de la quantité initiale de silice engagée dans la réaction.

Lorsque la dispersion colloïdale est déposée sous forme de film liquide sur un support, elle se concentre par évaporation de l'eau ou pénétration de la phase aqueuse dans le support, et l'on obtient ainsi un film de polymère chargé de silice, ce film étant généralement transparent.

Comme souligné antérieurement dans la description et comme le démontreront les exemples donnés ci-après, les films qui peuvent être obtenus à partir des suspensions contenant les particules mixtes selon l'invention, possèdent des propriétés mécaniques remarquables.

Lorsque une silice non fonctionnalisée est simplement adsorbée par la matrice polymérique qui l'enrobe (art antérieur), cette silice ne contribue qu'à augmenter la contrainte et l'allongement à la rupture du film (effet renforçant classique) ; lorsqu'elle est chimiquement liée à la matrice (invention), on constate de façon totalement surprenante que le film se comporte en outre comme un matériau réticulé (comportement élastomérique).

Des exemples illustrant l'invention vont maintenant être donnés.

Exemple 1

Cet exemple illustre la préparation de particules mixtes selon l'invention.

La silice initiale est une poudre de silice (surface spécifique BET : 200 $m^2/g$ ; diamètre moyen des particules primaires : 12 nm) commercialisée par la société DEGUSSA sous le nom de marque AEROSIL® A 200V.

I - fonctionnalisation de la silice

10 g de silice ci-dessus, préalablement séchée, sont placés dans un ballon réactionnel auquel on ajoute 200 ml de toluène anhydre. La suspension est agitée pendant 15 minutes pour homogénéiser le mélange. On introduit ensuite 3,06 g de triméthoxysilylpropylméthacrylate (agent de fonctionnalisation) dans le milieu. Le milieu est ensuite porté à reflux (111°C) sous balayage d'azote pendant 20 heures. A l'issue de ce traitement, la silice est alternativement centrifugée et lavée 3 fois par du toluène, puis séchée sous vide dans une étuve à 40°C, pour en éliminer le toluène résiduel.

Les analyses par spectroscopie à infra-rouge et par RMN (29Si) démontrent l'éxistence, à la surface de la silice traitée, des greffons suivants :

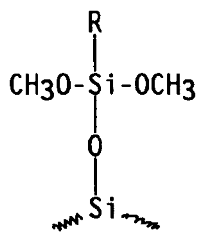 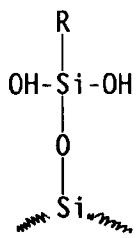 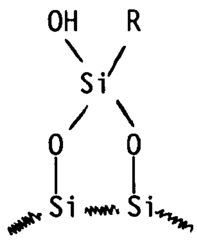 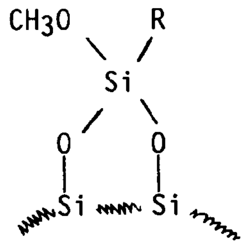

(1) (2) (3) (4)

où R représente

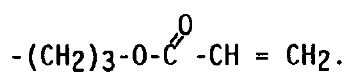

Des analyses élémentaires montrent par ailleurs que 90 % des sites silanols (Si-OH) présents initialement à la surface de la silice ont réagi avec le silane.

II- Polymérisation en émulsion du monomère

A - La silice fonctionnalisée obtenue précédemment est tout d'abord broyée pour obtenir une poudre très fine, puis mise en suspension à température ambiante dans 300 ml d'eau. Compte tenu du caractère relativement hydrophobe de cette silice, de l'isobutanol à raison de 0,4 g/g de silice, puis de l'ammoniaque pour amener le pH final à 9,5, sont ajoutés au milieu de manière à obtenir une parfaite dispersion des particules de silice dans l'eau (quasi abscence d'agrégats). La taille moyenne des particules en suspension, mesurée par microscopie électronique à transmission, est de 37 nm.

B - Après dégazage à l'azote, la suspension obtenue est alors portée puis maintenue à 60°C, et agitée constamment (250 rpm). Du nonylphénylpolyoxyéthylène présentant en moyenne environ 30 motifs d'oxyde d'éthylène (émulsifiant) est ensuite introduit en une quantité de 0,033 g, correspondant à sa concentation micellaire critique dans le milieu.

Puis on introduit goutte à goutte de l'acrylate d'éthyle (monomère), à la vitesse de 0,34 ml/mn.

Au bout de 5 minutes, du persulfate de potassium en solution aqueuse (amorceur) est également introduit dans le milieu de réaction, et ceci à raison de 0,75 g par litre de milieu de réaction, soit 0,22 g de persulfate de potassium.

L'addition du monomère, faite en semi-continue, est poursuivie jusqu'à épuisement de celui-ci. La quantité totale introduite est alors de 33,3 g. On laisse ensuite se poursuivre la réaction pendant 10 à 13 heures.

Différents essais ont été conduits en faisant varier le rapport en poids monomère/silice. Pour ce faire, on a fait simplement varier la quantité de silice dans la suspension initiale préparée au point A ci-avant, tous les autres paramètres restant identiques, et notamment la quantité de monomère utilisée (0,52 g, 1,04 g, 2,08 g, 4,16 g et 16,6 g de silice pour les essais respectivement 1.1, 1.2, 1.3, 1.4 et 1.5).

Les résultats de ces essais sont consignés dans le tableau 1. Dans tous les cas, on obtient des particules mixtes constituées individuellement de silice parfaitement encapsulée dans une matrice de polyacrylate d'éthyle. Ces particules se présentent sous la forme d'un colloïde. L'extrait sec du colloïde est de l'ordre de 10 % en poids.

TABLEAU I

| Essai | rapport en poids monomère/silice | % $SiO_2$ (1) | Taux de conversion du monomère % | Φm (2) (nm) | R(3) |
|---|---|---|---|---|---|
| 1.1 | 64/1 | 1,5 | 91,6 | 74 | 1,46 |
| 1.2 | 32/1 | 3 | 89,5 | 54 | 1,54 |
| 1.3 | 16/1 | 6 | 86,3 | 46 | 1,3 |
| 1.4 | 8/1 | 11 | 83,5 | 41 | 0,88 |
| 1.5 | 2/1 | 33,5 | 80,9 | 38 | 2,5 |

(1) : poids de $SiO_2$/poids de monomère + poids de $SiO_2$

(2) : diamètre moyen des particules mixtes obtenues, exprimé en nanomètre, et déterminé par analyse MET.

(3) : rapport entre le nombre de particules mixtes obtenues après polymérisation et le nombre de particules de silice présentes initialement.

Exemple 2

A titre comparatif, on prépare dans cet exemple des particules mixtes de l'art antérieur constituées d'une silice non fonctionnalisée encapsulée dans la même matrice polymérique que l'exemple 1 (polyacrylate d'éthyle).

La silice initiale utilisée est une silice colloïdale (surface spécifique BET : 140 m²/g ; diamètre moyen des particules en suspension : 22 nm) commercialisée par la Société DU PONT sous le nom de marque LUDOX® AS-40. Cette suspension étant parfaitement stable, elle n'éxige aucun traitement complémentaire. On procède alors directement dans cette suspension à la polymérisation de l'acrylate d'éthyle en suivant rigoureusement le mode opératoire tel que donné au point II-B de l'exemple 1.

Comme dans l'exemple 1, différents essais ont été conduits en faisant varier le rapport en poids monomère/silice. Les résultats de ces essais sont consignés dans le tableau II. Là encore, on obtient des particules mixtes en suspension constituées de silice encapsulée à l'intérieur d'une matrice de polyacrylate d'éthyle. L'extrait sec de la suspension est de l'ordre de 10 %.

TABLEAU II

| Essai | rapport en poids monomère/silice | % $SiO_2$ | taux de conversion du monomère % | $\Phi_m$ (nm) | R |
|---|---|---|---|---|---|
| 2.1 | - | 0 | 95 | 76 | - |
| 2.2 | 64/1 | 1,5 | 93,6 | 60 | 2,53 |
| 2.3 | 32/1 | 3 | 92,8 | 56 | 1,15 |
| 2.4 | 16/1 | 5,9 | 92,8 | 48 | 0,92 |
| 2.5 | 8/1 | 11,0 | 92,6 | 43 | 0,62 |
| 2.6 | 4/1 | 20,0 | 91,5 | 37 | 0,50 |
| 2.7 | 2/1 | 33,3 | 92 | 28 | 0,60 |

L'essai 2.1 correspond à la préparation d'un latex polyacrylate d'éthyle non chargé en silice.

Exemmple 3

Cet exemple a pour but de mettre en évidence et de comparer les propriétés mécaniques des films obtenus à partir des latex préparés aux exemples 1 et 2.

Méthodologie

Les films sont obtenus par la coalescence des latex. Ils sont préparés à température ambiante (22°C) par séchage des latex dans un moule constitué par des plaques de verre recouvertes de téflon. L'épaisseur des films est de 1 mm. Avant de verser dans le moule le latex, ce dernier est concentré à un taux de solide de 15 % environ en poids.

Les propriétés mécaniques (contrainte allongement) des films sont étudiées après deux semaines de maturation. Ces essais de traction consistent à étirer une éprouvette de dimensions connues jusqu'à sa rupture et à mesurer les variations de la force éxercée avec l'allongement. Ces mesures permettent d'estimer la résistance mécanique des matériaux. Ces éprouvettes sont découpées dans les films aux dimensions fixées par la norme ASTM (Anual Book of ASTM Standart, Vol. 08,1989).

Leur forme et dimensions sont données ci-dessous

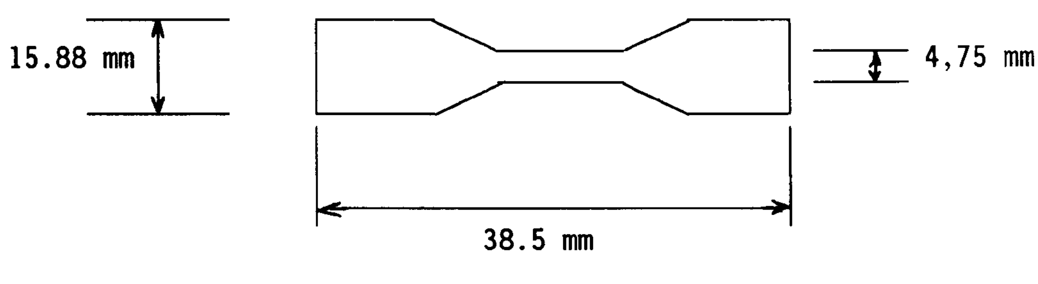


Ces mesures ont été effectuées sur un Instron modèle 1122. Les surfaces de chaque échantillon doivent être dépourvues d'imperfections. La vitesse de traction a été fixée à 12 mm/mn.

Les courbes force allongement obtenues donnent accès aux grandeurs suivantes :

– l'allongement relatif $\varepsilon$ qui est le rapport de l'allongement $\Delta L$ sur la longueur initiale de l'éprouvette Lo : $\varepsilon = \Delta L/Lo$.

– la contrainte σ qu i est définie comme le rapport de la force exercée F à la section de l'éprouvette.

<u>Résultats</u> :

Les courbes (1), (2), (3) et (4) de la figure 1 représentent les courbes contrainte allongement des films obtenus à partir des latex préparés respectivement aux essais 2.1, 2.2, 2.4 et 2.5 de l'exemple 2.

Les courbes (1)', (2)' et (3)' de la figure 2 représentent les courbes contrainte allongement des films obtenus à partir des latex préparés respectivement aux essais 1.1, 1.3 et 1.4 de l'exemple 1.

Comme le montre la figure 1, l'effet principal d'une silice non fonctionnalisée, et donc simplement adsorbée à l'intérieur de la matrice polymérique, est une augmentation de la contrainte. Cette contrainte augmente avec la quantité de silice. Le film très faiblement chargé en silice (courbe (2) : 1,5 % en $SiO_2$) a un comportement très comparable au film non chargé (courbe (1)). Tous les échantillons se rompent à l'exception des plus faiblement chargés en silice (1,5 et 3 % en $SiO_2$) qui, après réversibilité, ont instantanément un allongement relatif de 3.

La figure 2, quant à elle, montre que les films obtenus à partir des latex chargés en silice selon l'invention, présentent un comportement élastomérique remarquable. En fait, la croissance continue de la contrainte en fonction de l'allongement donne à ces films un comportement comparable à des films réticulés.

Dans ce cas, la charge de silice n'a pas un effet important sur la contrainte à la rupture, mais plutôt sur l'allongement à la rupture. Contrairement aux films de l'art antérieur, le fluage des chaînes n'est pas observé et tous les échantillons se rompent, même à faible charge en silice.

On notera enfin que les latex à base des particules mixtes selon l'invention ont présenté l'avantage particulièrement intéressant de conduire à des films parfaitement transparents.

## Revendications

**1 -** Particules mixtes, du type comprenant une silice encapsulée à l'intérieur d'une matrice polymérique à propriétés filmogènes, caractérisées en ce que ladite matrice est chimiquement liée à la surface de ladite silice par des liaisons siloxanes Si - 0 - Si.

**2 -** Particules mixtes selon la revendication 1, caractérisées en ce que leur taille moyenne est comprise entre 20 nanomètres et 1 micron.

**3 -** Particules mixtes selon l'une des revendications 1 et 2, caractérisées en ce que leur teneur en silice est comprise entre 0,1 % et 20 % en poids.

**4 -** Particules mixtes selon l'une quelconque des revendications 1 à 3, caractérisées en ce qu'elles se présentent sous la forme d'un colloïde.

**5 -** Procédé de préparation de particules mixtes selon l'une des revendications 1 à 4, du type consistant à (co)polymériser, en présence d'une silice à l'état finement divisé, des (co)monomères organiques polymérisables, ce par quoi on obtient des particules mixtes comprenant de la silice encapsulée à l'intérieur d'une matrice de polymères, et caractérisé en ce que l'on utilise une silice dont la surface a été fonctionnalisée au moyen d'un organosilane de formule (1) :

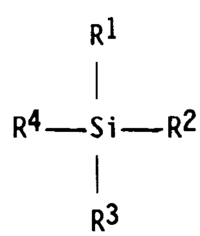

(1)

formule dans laquelle (i) au moins un des radicaux $R^1$, $R^2$, $R^3$ et $R^4$ est un radical organique présentant une insaturation éthylénique, (ii) aux moins un des radicaux $R^1$, $R^2$, $R^3$ et $R^4$ est un radical alkoxy ou hydroxy, (iii) les radicaux restants étant choisis, identiques ou différents, dans les classes de radicaux susmentionnées.

**6 -** Procédé de préparation selon la revendication 5, caractérisé en ce que ledit radical organique à insaturation éthylénique est un radical alcényle à insaturation en ω, ayant de 2 à 10 atomes de carbone.

**7 -** Procédé de préparation selon la revendication 5, caractérisé en ce que ledit radical organique à insaturation éthylénique est un ester d'acide carboxylique, ayant une insaturation éthylénique en ω, dérivant d'acides carboxyliques ayant jusqu'à 4 atomes de carbone ou d'alcools ayant jusqu'à 6 atomes de carbone.

**8** - Procédé de préparation selon l'une quelconque des revendications 5 à 7, caractérisé en ce que ledit organosilane répond à la formule (2):

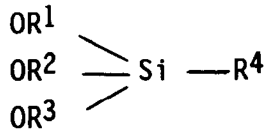

(2)

formule dans laquelle $R^4$ est un radical organique présentant une insaturation éthylénique, et $R^1$, $R^2$ et $R^3$ sont des radicaux alkyles ou l'hydrogène.

**9** - Procédé de préparation selon l'une quelconque des revendications 5 à 8, caractérisé en ce que le rapport en poids [silice engagée/(co)monomère(s) engagé(s)] est compris entre 1/1 et 1/100, de préférence entre 1/4 et 1/100.

**10** - Procédé de préparation selon l'une quelconque des revendications 5 à 9, caractérisé en ce que l'on utilise un émulsifiant à caractère non ionique possédant une chaîne polyoxyéthylénique.

**11** - Compositions aqueuses filmogènes, caractérisées en ce qu'elles comprennent des particules mixtes telles que définies à l'une quelconque des revendications 1 à 4 ou susceptibles d'être obtenues selon un procédé tel que défini à l'une quelconque des revendications 5 à 10.

**12** - Films en polymères, caractérisés en ce qu'ils sont obtenus à partir de compositions selon la revendication 11.

**13** - Films selon la revendication 12, caractérisés en ce qu'ils sont transparents.

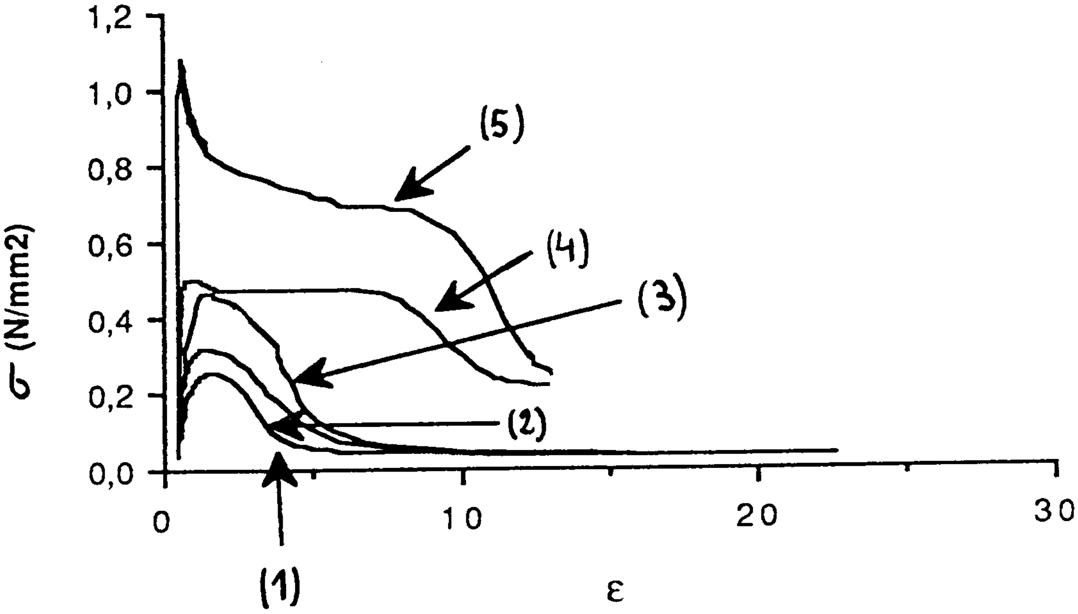


FIG. 1

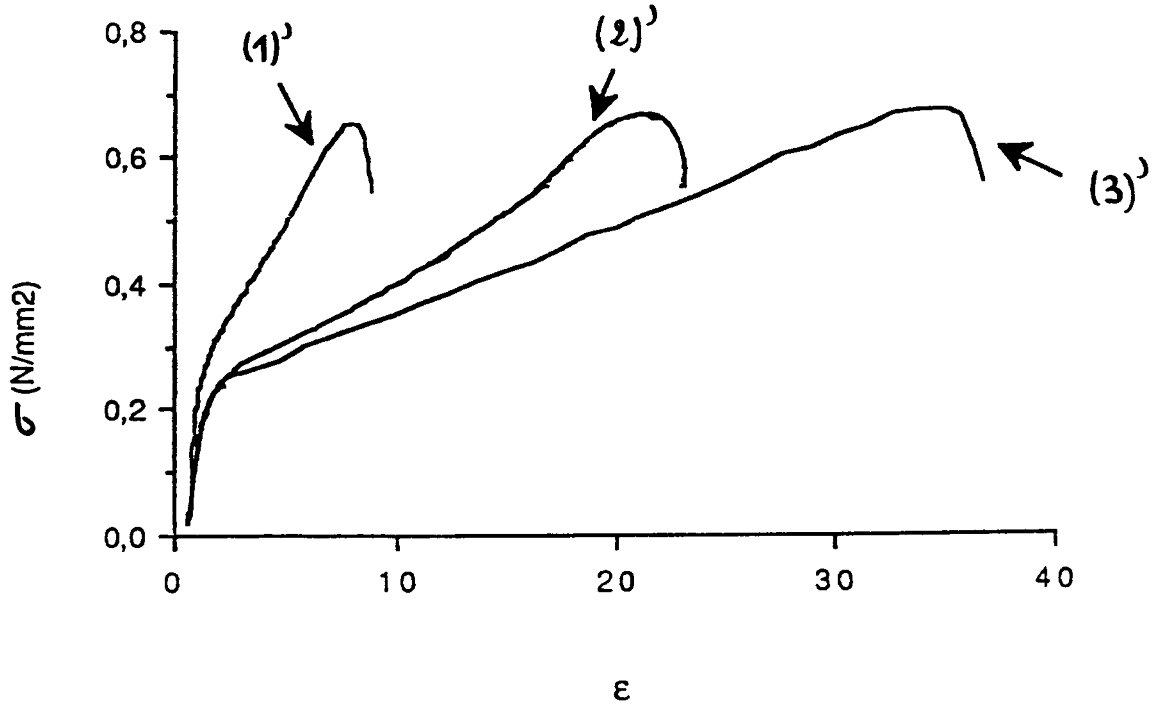


FIG. 2

Office européen des brevets

# RAPPORT DE RECHERCHE EUROPEENNE

Numero de la demande

EP 92 40 0592

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | JOURNAL OF APPLIED POLYMER SCIENCE, vol. 37, no. 10, 20 mai 1989, NEW YORK, US, pages 2921-2931; CHAIMBERG et al.: "Graft polymerisation of polyvinylpyrrolidone onto silica" | 1 | C 08 F 292/00<br>C 08 F 2/44 |
| Y | * page 2922, dernier paragraphe - page 2923, paragraphe 1 * | 1-13 | |
| D,Y | POLYMER BULLETIN, vol. 24, 1990, pages 173-179; ESPIARD et al.: "A novel technique for preparing organophilic silica .."<br>* summary (page 173), experimental procedure (page 174) * | 1-13 | |
| A | EP-A-0 345 581 (BAYER) | | |
| A | BE-A- 674 775 (MONSANTO) | | |

| DOMAINES TECHNIQUES RECHERCHES (Int. Cl.5) |
|---|
| C 08 F |

Le présent rapport a été établi pour toutes les revendications

| Lieu de la recherche | Date d'achèvement de la recherche | Examinateur |
|---|---|---|
| LA HAYE | 17-07-1992 | LOISELET-TAISNE S.M.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)